# EUROPEAN PATENT SPECIFICATION

(11) **EP 0 446 520 B1**
(45) Date of publication and mention of the grant of the patent: **27.07.1994**
(21) Application number: 90312485.7
(22) Date of filing: 16.11.1990
(51) Int. Cl.: F23K 3/02, B65G 53/66

(54) **Monitoring and controlling the flow of fluid transported solid particles**
Überwachung und Steuerung der Strömung von in einem Fluid geförderten Feststoffteilchen
Surveillance et commande du courant des particules solides entraînées par un fluide

(30) Priority: 14.03.1990 US 493171
(43) Date of publication of application: 18.09.1991
(73) Proprietor: THE BABCOCK & WILCOX COMPANY, New Orleans, Louisiana 70160 (US)
(72) Inventor: Kim, Raymond K., Northeast, Canton, Ohio 44714 (US)
(74) Representative: Cotter, Ivan John

(56) References cited:
- FR-A- 2 414 720
- US-A- 4 198 860
- US-A- 4 628 830
- US-A- 4 903 901
- CONTROL ENGINEERING. vol. 18, no. 4, April 1971, NEW YORK US page 41; 'Fluidic wind sensor aids low airspeed measurement'

## Description

This invention relates to monitoring and controlling the flow of fluid transported solid particles, for example pulverised coal.

In a pulverised coal burning boiler, one or more pulverisers are used to grind lumps of crushed coal into particulates with a certain desired size distribution. The airborne pulverised coal (PC) is typically transported to each burner in feed pipes of a diameter ranging from 20.3 to 60.0 cm (8 to 24 inches). The number of burners fed by one pulverizer can be anywhere from 2 to 13, supplied by as many pipes carrying the pulverised coal.

In a multiple-burner boiler operation, it is highly desirable to maintain a good balance among all the burners to attain thermal efficiency and to maintain close control of stack emissions. The flow of pulverised coal is the single most important process variable that needs to be controlled to achieve balanced operation among several burners. To balance the burners, it is necessary to measure and control the coal flow rate and the primary and secondary air flow rates to each burner. Balanced burner operation requires that the mass flow rate of both air and pulverised coal be the same among all the pipes leading to the burner within certain operating limits. Each supply pipe or feed pipe installed between the pulveriser and the burner generally has a hydraulic resistance which is somewhat different from the other supply pipes or feed pipe lines due to differences in overall length of each pipe line, and the type and number of bends used for each pipe line. These variations in line resistance can cause an imbalance of the primary air and coal flow among the pulverised coal supply pipe lines. The imbalance needs to be corrected to ensure efficient combustion.

Common industry practice is to add a fixed resistance orifice or sections of small diameter pipe in a line that has a lower resistance than desired. Then, the balancing of primary air flow in each line is confirmed by measuring the air flow on each line with a pitot tube in the absence of pulverised coal flow. However, the balanced primary air flow alone does not necessarily ensure a balanced pulverised coal flow in the system, due to the asymmetric flow distribution at the pulveriser outlet and peculiarities in the airborne solids flow.

Despite the express need, the development of pulverised coal flow monitoring and controlling devices have been severely hampered for two basic reasons. The highly abrasive pulverised coal flow precluded the use of any intrusive means, and the extremely non-uniform and unstable pulverised coal flow interfered with most of the non-intrusive methods tried and prevented them from achieving an acceptable level of measurement accuracy.

Over the years, a number of methods for measuring mass flow rates of pulverised coal flowing in pipes have been tried. They include such intrusive approaches as using pressure difference, mass reaction, turbine flowmeters and Coriolis mass flowmeters, and such non-intrusive methods as thermal, nuclear, electrical, magnetic, optical, acoustic and ultrasonic.

US Patent No US-A-4 830 287 (The Babcock & Wilcox Company) discloses a pulverised coal flow control system with an aspirator connected to the outer wall of a bend provided in the supply pipe. The aspirator draws off an amount of mixture from the supply pipe and re-injects it back into the pulveriser. As a result, the flow mixture is controlled through the supply pipe.

The foregoing pulverised coal flow control system needs diverted control bypass lines, which can be costly to install.

US-A-4 903 901 (The Babcock & Wilcox Company), which is hereby incorporated herein by reference, discloses a pulverised coal flow controller employing a number of jets which inject a fluid such as compressed air to interfere with the normal flow of primary air. The reduction of primary air flow is controlled by the fluid injection pressure. A reduction in primary air flow causes a decrease in the coal flow which allows for balancing the burners.

In order to control the coal flow distribution to the burners connected to a common pulveriser, a knowledge of the existing coal distribution is necessary before corrective action can be taken. Consequently, a measure of the coal flow rate in each feed pipe must be determined.

US-A-4 198 860 describes a suspended particle flow rate meter which responds to the difference between a fluid flow rate and a flow rate of a mixture of the fluid and the suspended particles.

Accordingly, there is a need for an integrated system which determines the coal flow rate in each feed pipe and then controls the coal flow in each feed pipe, which as a result balances the coal flow distribution to the burners.

According to one aspect of the invention there is provided apparatus for monitoring and controlling the flow of fluid transported solid particles, the apparatus comprising:
a vessel for containing a mixture of primary fluid with suspended particles;
at least one feed pipe connected to the vessel for supplying a flow of said mixture from the vessel;
means for determining a mass flow rate of the transported solid particles in the or each feed pipe, the determining means being operative to establish a control signal indicative of the mass flow rate in the or each feed pipe; and
means for regulating fluid injection in the or each feed pipe in response to the control signal;
characterised by:
primary fluid flow measuring means for measuring the flow rate of the primary fluid in the or each feed pipe and establishing a signal indicative thereof, the primary fluid flow measuring means including a flow channel situated on the or each feed pipe, injecting means for injecting a fluid under pressure in one side of the flow channel, and at least two pressure sensors mounted upstream and downstream, respectively, of the position of injection of the fluid for determining differential pressure; and
mixture flow measuring means for measuring the flow rate of the mixture in the or each feed pipe and establishing a signal indicative thereof;
and in that the determining means is operative to determine the mass flow rate of the transported solid particles from the primary fluid flow rate signal and the mixture flow rate signal.

According to a further aspect of the invention there is provided a method of monitoring and controlling the flow of fluid transported solid particles, the method comprising the steps of:
suspending solid particles in a vessel to form a mixture of solid particles in a primary fluid;
discharging the mixture from the vessel through at least one feed pipe;
calculating a mass flow rate of the transported solid particles and establishing a control signal indicative of the mass flow rate in the or each feed pipe; and
controlling fluid injection in the or each feed pipe in response to the control signal;
characterised by the steps of:
measuring the flow rate of the primary fluid in the or each feed pipe and establishing a signal indicative thereof, the primary fluid flow rate measuring step comprising injecting a fluid under pressure in one side of a flow channel in the or each flow pipe, and sensing pressure upstream and downstream of the injected fluid for determining a differential pressure; and
measuring the flow rate of the mixture in the or each feed pipe and establishing a signal indicative thereof;
and in that the calculating step comprises calculating the mass flow rate of the transported solid particles from a difference in the mixture flow rate and the primary fluid flow rate.

A preferred embodiment of the invention described in detail below solves or at least alleviates the problems associated with the prior art by providing an integrated system or apparatus and method for monitoring and controlling the flow of fluid transported solid particles, for example (but not exclusively) pulverised coal. The apparatus and method determine the mixture and the air flow rates in each of a plurality of feed pipes so that the mass flow rate of the transported solid particles contained therein may be determined from the difference. A control signal indicative of the mass flow rate is established for each feed pipe and changes therein can be used to regulate fluid injection in the feed pipes. In more detail, once the mass flow rate in all of the feed pipes is known, depending on the extent of the existing flow rate imbalance, a fluid such as air is injected into a feed pipe in a controlled manner to cause a pneumatic resistance in the line to increase relative to the other feed pipes which are, for example, connected to a common pulveriser. As a consequence, the mass flow rate of the transported solid particles in the line decreases by a small amount in proportion to the applied injection pressure, which causes the flow in the other lines to increase. This is repeated for all or some of the lines until a desired level of flow balance among the lines is achieved. The preferred system, which takes the form of a pulverised coal flow monitor and control system, is simple in design, rugged in construction, and economical to manufacture.

The invention will now be further described, by way of illustrative and non-limiting example, with reference to the accompanying drawings, in which like references indicate like items throughout, and in which:
Figure 1 is a schematic representation of a pulverised coal flow monitor and control system according to a preferred embodiment of the invention with one of a plurality of monitor/controllers thereof being shown enlarged and in section;
Figure 2 is a partial sectional illustration of an air flow meter as employed in a portion of a feed pipe of the system;
Figure 3 is a cross-sectional illustration of Figure 2; and
Figure 4 is a graph illustrating the operating characteristics of a pulverised coal flow (PCF) controller for boiler operators embodying the invention.

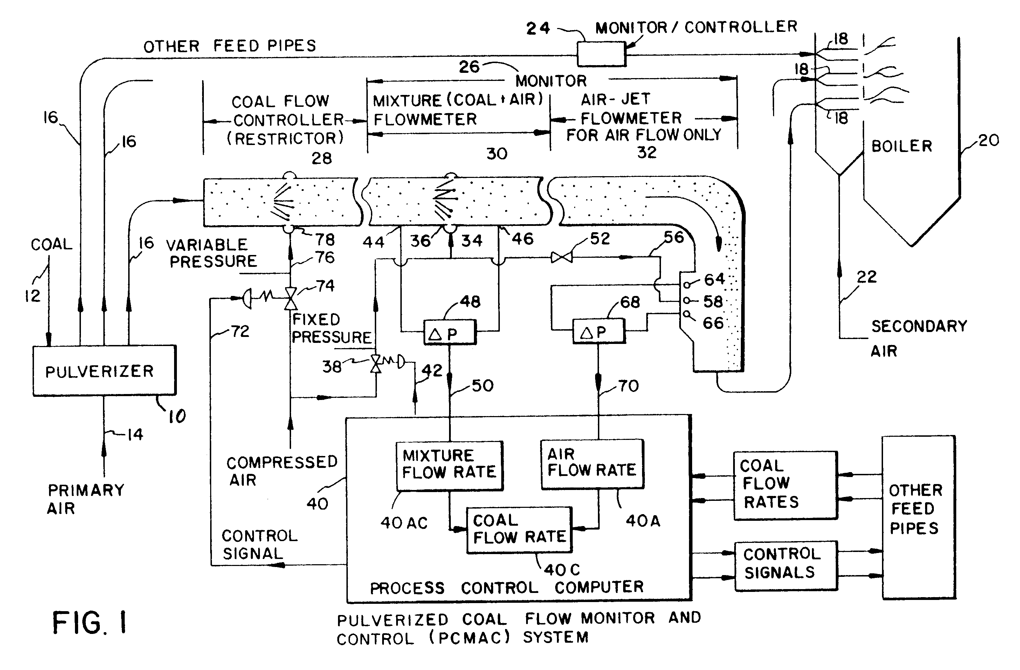

Figure 1 illustrates an arrangement which includes a pulveriser or vessel 10 having grinding wheels (not shown) therein for grinding coal supplied thereto along a line 12 from a source. Primary air 14 is supplied to the pulveriser 10 for pneumatically suspending solid particles of pulverised coal produced in the pulveriser (vessel) 10. The solid particles of pulverised coal are conveyed out of the pulveriser 10 through feed pipes or lines 16 which ultimately reach burners 18 of a furnace or a boiler 20. Secondary air 22 is normally supplied to the burners 18 to ensure complete combustion. Positioned in each of the feed pipes 16 is a pulverised coal flow monitor and control system (monitor/controller) 24.

The pulverised coal flow monitor and control (PCMAC) system 24 comprises a pulverised coal flow monitor 26 and a pulverised coal flow controller 28. The pulverised coal flow monitor 26 comprises a coal/air mixture flow meter 30 and an air flow meter 32. Each of the three components, i.e. the air flow meter 32, the air/coal mixture flow meter 30, and the pulverised coal flow controller 28, making up an integrated system in accordance with the invention, will be discussed in detail.

Prior to an operator taking any type of control action, the present status of the flow in the feed pipes 16 must be known. Accordingly, the operator is interested in monitoring the coal flow rates in all of the feed pipes 16 connected to the (common) pulveriser 10. The monitored coal flow rates in the pipes 16 are then used as the basis of any corrective action, if necessary. These monitoring tasks are accomplished in the present arrangement in two steps: (1) determining the mass flow rate of the coal/air mixture, and (2) measuring the air flow rate, separately. The coal mass flow rate is then determined by subtracting the air flow rate from the mixture flow rate.

In the coal/air mixture flow meter 30, compressed air from a source is supplied along a line 34 to a plurality of holes, slits, or nozzles 36 where it is injected into each feed pipe 16. The air is injected at a predetermined constant pressure such as 103 kPa (15 lbf/in² or psi) gauge as determined by a pressure regulating valve 38 which may be either manually operated or remotely operated by a process control computer 40 along a line 42. Preferably, the air is injected at an angle of about 45^{o} against the flow so that the air streams interfere with the flowing coal and primary air, causing a pressure drop that is proportional to the mass flow rate of the mixture. The pressure drop is measured with a pair of static pressure sensors 44, 46 placed upstream and downstream of the air nozzles 36, respectively. The pressure difference is relayed by a differential pressure transducer 48 to the process control computer 40 along a line 50. The coal/air mixture mass flow rate is determined by a calibration equation stored in the process control computer 40 and a signal indicative thereof is retained in a memory 40AC thereof.

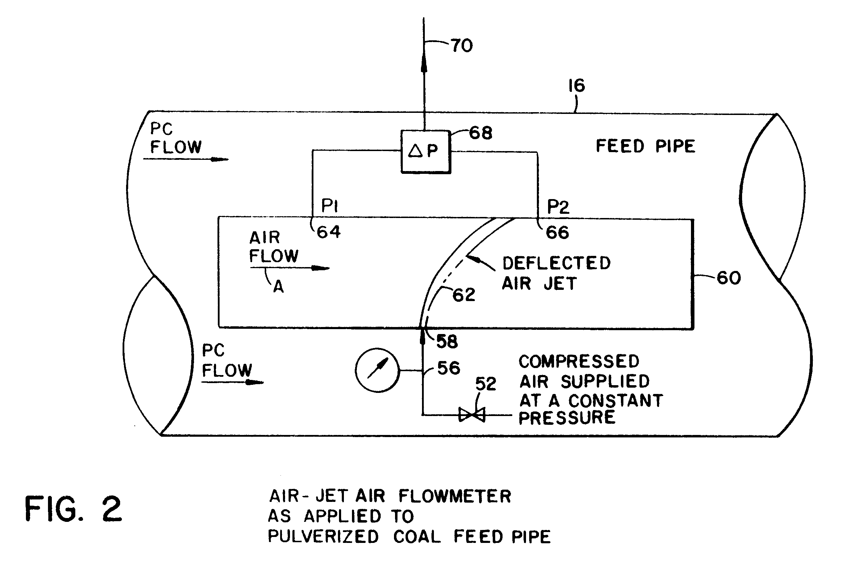

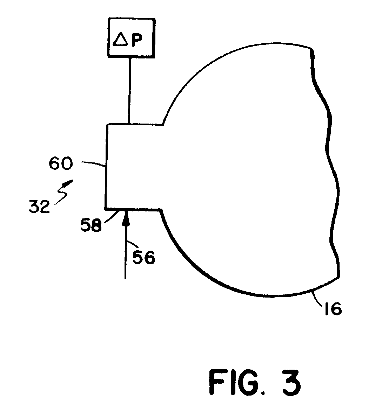

While the coal/air mixture flow meter 30 is engaged, the air flow meter 32 is activated when a valve 52 is opened either manually or remotely as is illustrated in Figure 2. The valve 52 supplies a fluid such as compressed air at a constant pressure along a line 56 to an air nozzle or an opening 58 positioned in one side of a flow channel or groove 60 as is shown in Figures 2 and 3. The air supplied from the air nozzle 58 is deflected in the direction indicated by lines 62 (Figure 2) from the air flow in the channel 60 as indicated by an arrow A. The flow channel 60 is preferably rectangular and is preferably located on a straight section of the pipe 16 where entrenchment or coal "roping" is unlikely, such as following a bend. The term "roping" is a term known to those skilled in this art and represents a form of severe spatial and temporal maldistribution induced in mixture flows of widely different component densities. It is a condition where a large portion of the coal flow is in a band running along one side of the pipe 16. There are not any successful methods to account for "roping", because of the instability and unpredictability inherent in this behaviour. The air deflected (as indicated by the lines 62) by the air flow in the channel 60 produces a velocity-dependent pressure difference between pressure sensors 64, 66 which are situated upstream and downstream, respectively, of the air nozzle 58. A pressure transducer 68 sends the pressure difference to the process control computer 40 via a line 70 and the computer 40 determines the air flow rate from the calibration equations stored therein. The computer 40 generates a signal indicative of the air flow rate and retains it in a memory 40A. Then, the computer 40 establishes a control signal indicative of the coal flow rate in a memory 40C by taking the difference of the mixture and the air flow rates stored in the memories 40AC and 40A, respectively. The computer 40 preferably is able to cause display of the coal mass flow rate in all of the feed pipes 16.

After the coal mass flow rates in all of the feed pipes 16 connected to the pulveriser (10) are determined, a flow-balancing procedure is initiated. Referring to Figure 1, depending on the extent of the existing flow imbalance and the degree of correction desired, the process control computer 40 either automatically or manually sends a control signal along a line 72 to a pressure regulating valve 74. Fluid such as air is provided from a source along a line 76 and is controlled by the pressure regulating valve 74 and injected by a plurality of holes, slits, or nozzles 78 situated circumferentially around the feed pipe 16. The injection nozzles 78 provide a momentum of air so as to cause an interference with the pulverised coal flow in the feed pipe 16. This momentum input from the injection nozzles 78 is variable by increasing or decreasing the injection air pressure using the pressure regulating valve 74. The interfering air streams cause a pneumatic resistance in the feed pipe 16 to increase relative to the other feed pipes 16 connected to the common pulveriser 10. As a consequence, the pulverised coal mass (coal + air) flow rate in the line decreases by a small amount Δm in proportion to the applied injection pressure, and the flow in the other feed pipes 16 increases theoretically by Δm/n, where n is the number of feed pipes 16. This controlling process is repeated for all or some of the feed pipes 16 until a desired level of flow balance is achieved.

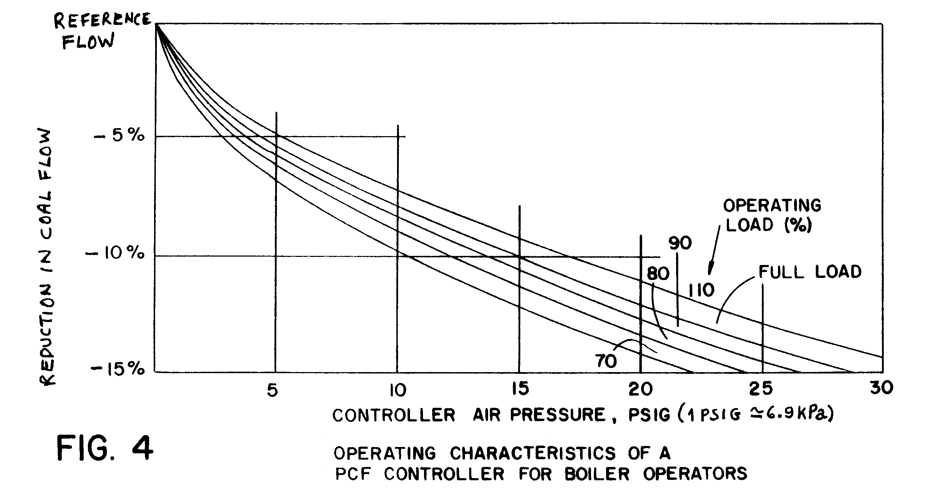

Figure 4 is a graph representing the operating characteristics of a pulverised coal flow controller in accordance with the invention for boiler operators. For instance, if a 5% reduction in a particular feed pipe 16 is desired, the process control computer 40 or operator adjusts the controller air pressure, using the pressure regulating value 74, to 34.5 kPa (5 lbf/in² or psi) gauge.

The horizontal axis of Figure 4 represents pressure in units of psig (lbf/in² gauge). These units can be converted to kPa by multiplying them by 6.9 (approximately).

Although the invention was conceived primarily to solve problems associated with airborne coal particles at boiler plants, the invention has wider applications in any fluid transport system carrying solid particles. The fluid may either be a gas or a liquid. When employing a liquid fluid system, pumps generate injection pressure to decrease the fluid flow. Alternatively, a gas may be used to decrease liquid fluid flow transporting solid particles. Specifically, the invention finds particular (but not exclusive) utility and applications where the flowing media is highly erosive and where the system cannot tolerate an appreciable increase in pressure drop as well as where long-term reliable service is required. Many processes in the petrochemical, food processing, and pharmaceutical industries transport solid particles in powder form pneumatically. The flow rates of the solids often need to be controlled on-line.

The embodiment of the invention described above can of course be modified within the scope of the invention. An example of such a modification is to taper the downstream ends of the flow channels 60 towards the inside wall of the feed pipes 16 to prevent excess erosion.

## Claims

1. Apparatus for monitoring and controlling the flow of fluid transported solid particles, the apparatus comprising:
a vessel (10) for containing a mixture of primary fluid with suspended particles;
at least one feed pipe (16) connected to the vessel (10) for supplying a flow of said mixture from the vessel (10);
means (40) for determining a mass flow rate of the transported solid particles in the or each feed pipe (16), the determining means (40) being operative to establish a control signal indicative of the mass flow rate in the or each feed pipe (16); and
means (74, 76, 78) for regulating fluid injection in the or each feed pipe (16) in response to the control signal;
characterised by:
primary fluid flow measuring means (32) for measuring the flow rate of the primary fluid in the or each feed pipe (16) and establishing a signal indicative thereof, the primary fluid flow measuring means (32) including a flow channel (60) situated on the or each feed pipe (16), injecting means (52, 56, 58) for injecting a fluid under pressure in one side of the flow channel (60), and at least two pressure sensors (64, 66) mounted upstream and downstream, respectively, of the position of injection of the fluid for determining differential pressure; and
mixture flow measuring means (30) for measuring the flow rate of the mixture in the or each feed pipe (16) and establishing a signal indicative thereof;
and in that the determining means (40) is operative to determine the mass flow rate of the transported solid particles from the primary fluid flow rate signal and the mixture flow rate signal.

2. Apparatus according to claim 1, wherein the mixture flow measuring means (30) includes means (34, 36, 38) for injecting a fluid at a predetermined constant pressure into the or each feed pipe (16) and at least two pressure sensors (44, 46) of which one is situated upstream of the injecting means and the other downstream thereof for measuring a pressure difference.

3. Apparatus according to claim 1 or claim 2, wherein the determining means (40) includes a computer having calibration equations stored therein for determining the mass flow rate of the transported solid particles in the or each feed pipe (16) from a difference between the mixture mass flow rate and primary fluid flow rate.

4. Apparatus according to any one of claims 1 to 3, comprising means for displaying the solid particle mass flow rate in the or all of the feed pipes (16).

5. Apparatus according to any one of the preceding claims, wherein the regulating means (74, 76, 78) includes means (78) for injecting a fluid under pressure into the or each feed pipe (16), the injecting means (78) being situated so that the injected fluid causes a pneumatic resistance in the feed pipe to effect a decrease in mixture mass flow rate therethrough.

6. A pulverised coal flow monitor and control system comprising apparatus according to claim 1, in which:
the primary fluid is air;
the suspended solid particles are coal particles;
the vessel (10) comprises at least one pulveriser (10) for grinding coal whereby the or each pulveriser contains a mixture of primary air with suspended coal particles;
the determining means (40) is operative to determine the coal flow rate in each feed pipe (16) from a difference between the mixture mass flow rate and the primary fluid flow rate, and to provide a control signal indicative of the coal flow rate;
the system comprising;
a plurality of feed pipes (16) connected to the or each pulveriser (10) for supplying a flow of the mixture to a furnace (20); and
means (74, 76, 78) for regulating the coal flow rate in each feed pipe (16) in response to the control signal.

7. A system according to claim 6, wherein said injecting means (52, 56, 58) includes a respective air nozzle (58) positioned in one side of each flow channel (60), each air nozzle (58) being connected to a supply of air, and wherein a respective said at least two pressure sensors (64, 66) are mounted upstream and downstream, respectively, of each air nozzle (58).

8. A system according to claim 7, wherein each flow channel (60) is tapered at a downstream end thereof.

9. A system according to claim 6, claim 7 or claim 8, wherein the mixture flow measuring means (30) includes means (34, 36, 38) for injecting air at a predetermined constant pressure into each feed pipe (16) and a least two pressure sensors (44, 46) for each feed pipe of which one is situated upstream of the injecting means and the other downstream thereof for sensing a pressure difference.

10. A system according to any one of claims 6 to 9, wherein the determining means (40) includes a computer having calibration equations stored therein, the computer being operative to receive the primary fluid flow rate and mixture flow rate signals for determining the coal flow rate and establishing the control signal indicative thereof.

11. A system according to any one of claims 6 to 10, wherein the regulating means (74, 76, 78) includes a plurality of air nozzles (78) circumferentially oriented around each feed pipe (16) for injecting air in response to the control signal.

12. A method of monitoring and controlling the flow of fluid transported solid particles, the method comprising the steps of:
suspending solid particles in a vessel (10) to form a mixture of solid particles in a primary fluid;
discharging the mixture from the vessel (10) through at least one feed pipe (16);
calculating (40) a mass flow rate of the transported solid particles and establishing a control signal indicative of the mass flow rate in the or each feed pipe (16); and
controlling (74) fluid injection in the or each feed pipe (16) in response to the control signal;
characterised by the steps of:
measuring (32) the flow rate of the primary fluid in the or each feed pipe (16) and establishing a signal indicative thereof, the primary fluid flow rate measuring step (32) comprising injecting a fluid under pressure in one side of a flow channel in the or each flow pipe (16), and sensing (64, 66) pressure upstream and downstream of the injected fluid for determining a differential pressure; and
measuring (30) the flow rate of the mixture in the or each feed pipe (16) and establishing a signal indicative thereof;
and in that the calculating step comprises calculating the mass flow rate of the transported solid particles from a difference in the mixture flow rate and the primary fluid flow rate.

13. A method according to claim 12, wherein the mixture flow rate measuring step (30) comprises injecting (36) a fluid at a predetermined constant pressure in the or each feed pipe (16), and sensing (44, 46) the pressure upstream and downstream of the injected fluid for measuring a pressure difference.

## Patentansprüche

1. Vorrichtung zum Überwachen und Steuern des Stromes von durch ein Fluid transportierten Feststoffteilchen, wobei die Vorrichtung aufweist:
einen Behälter (10) für die Aufnahme einer Mischung aus einem primären Fluid mit darin aufgeschwemmten Teilchen,
zumindest ein Zuführrohr (16), welches mit dem Behälter (10) verbunden ist, um aus dem Behälter (10) einen Strom dieser Mischung zuzuführen,
Einrichtungen (40) zum Bestimmen einer Massenstromrate der transportierten Feststoffteilchen in dem bzw. jedem Zuführrohr (16), wobei die Bestimmungseinrichtungen (40) so betreibbar sind, daß sie ein Steuersignal bereitstellen, welches die Massenstromrate in dem bzw. jeden Zuführrohr (16) anzeigt, und
Einrichtungen (74, 76, 78) zum Regeln der Fluideinspritzung in das oder jedes Zuführrohr (16) unter Ansprechen auf das Steuersignal,
gekennzeichnet durch:
primäre Fluidstrommesseinrichtungen (32) zum Messen der Stromrate des primären Fluids in dem bzw. jedem Zuführrohr (16) und zum Bereitstellen eines Signals, welches ein Indikator für diese ist, wobei die Messeinrichtungen (32) für den primären Fluidstrom einen Strömungskanal (60) aufweisen, der in dem bzw. jedem Zuführrohr (16) angeordnet ist, Einspritzeinrichtungen (52, 56, 58), um in den Strömungskanal (60) von einer Seite her ein Fluid unter Druck einzuspritzen, und zumindest zwei Drucksensoren (64, 66), die bezüglich der Einspritzposition des Fluids stromaufwärts bzw. stromabwärts montiert sind, um den Differenzdruck zu bestimmen, und
Mischungsstrommesseinrichtungen (30), zum Messen der Stromrate der Mischung in dem bzw. jedem Zuführrohr (16) und zum Bereitstellen eines Signals, welches ein Indikator für diese Stromrate ist,
und dadurch, daß die Bestimmungseinrichtungen (40) so betreibbar sind, daß sie die Massenstromrate der transportierten Feststoffpartikel aus dem Signal der primären Fluidstromrate und dem Signal der Mischungsstromrate bestimmen.

2. Vorrichtung nach Anspruch 1, wobei die Messeinrichtung für den Mischungsstrom Einrichtungen (34, 36, 38) zum Einspritzen eines Fluids in das oder jedes Zuführrohr (16) unter einem vorbestimmten, konstanten Druck und zumindest zwei Drucksensoren (44, 46) aufweist, von denen einer stromaufwärts von der Einspritzeinrichtung und der andere stromabwärts von dieser angeordnet ist, um eine Druckdifferenz zu messen.

3. Vorrichtung nach Anspruch 1 oder 2, wobei die Bestimmungseinrichtung (40) einen Computer aufweist, der Kalibriergleichungen gespeichert hat, um die Massenstromrate der transportierten Feststoffpartikel in dem bzw. jedem Zuführrohr (16) aus einer Differenz zwischen der Massenstromrate der Mischung und der Rate des Primärfluidstromes zu bestimmen.

4. Vorrichtung nach einem der Ansprüche 1 bis 3, mit Einrichtungen zum Anzeigen der Massenstromrate der Feststoffteilchen in dem oder in allen Zuführrohren (16).

5. Vorrichtung nach einem der vorstehenden Ansprüche, wobei die Regeleinrichtungen (74, 76 78) Einrichtungen (78) aufweisen, um ein Fluid unter Druck in das oder jedes Zuführrohr (16) einzuspritzen, wobei die Einspritzeinrichtung (78) so angeordnet ist, daß das eingespritzte Fluid in den Zuführrohr einen pneumatischen Widerstand bewirkt, um eine Absenkung der Massenstromrate der Mischung durch dieses zu bewirken.

6. Überwachungs- und Steuersystem für einen Strom aus Kohlenstaub mit einer Vorrichtung gemäß Anspruch 1, wobei:
das primäre Fluid Luft ist,
die aufgeschwemmten Feststoffteilchen Kohleteilchen sind,
der Behälter (10) zumindest eine Pulverisiereinrichtung (10) aufweist, um die Kohle zu mahlen, wobei die bzw. jede Pulverisiereinrichtung eine Mischung aus Primärluft mit aufgeschwemmten bzw. suspendierten Kohleteilchen enthält,
die Feststelleinrichtung (40) so betreibbar ist, daß sie die Kohlestromrate in jedem Zuführrohr (16) aus einer Differenz zwischen der Massenstromrate der Mischung und der Rate des Primärfluidstromes bestimmt und daß die ein Steuersignal bereitstellt, welches die Kohlestromrate anzeigt,
wobei das System aufweist:
eine Mehrzahl von Zuführrohren (16), die mit der bzw. jeder Pulverisiereinrichtung (10) verbunden sind, um einen Strom einer Mischung einem Ofen (20) zuzuführen,
Einrichtungen (74, 76, 78) zum Regulieren der Kohlestromrate in jedem Zuführrohr (16) unter Ansprechen auf das Steuersignal.

7. System nach Anspruch 6, wobei die Einspritzeinrichtungen (52, 56, 58) eine entsprechende Luftdüse (58) aufweisen, die auf einer Seite jedes Strömungskanales (60) angeordnet ist, wobei jede Luftdüse (58) mit einer Luftzufuhr verbunden ist und wobei jeweils einer der zumindest zwei Drucksensoren (64, 66) stromaufwärts bzw. stromabwärts von jeder Luftdüse (58) montiert ist.

8. System nach Anspruch 7, wobei jeder Strömungskanal (60) an seinem stromabwärtigen Ende verjüngt zuläuft.

9. System nach Anspruch 6, 7 oder 8, wobei die Messeinrichtungen (30) für den Mischungsstrom Einrichtungen (34, 36, 38) aufweisen, um Luft mit einem vorbestimmten, konstanten Druck in jedes Zuführrohr (16) einzuspritzen, sowie zumindest zwei Drucksensoren (44, 46) für jedes Zuführrohr aufweisen, wobei einer der Drucksensoren stromaufwärts von der Einspritzeinrichtung und der andere stromabwärts von dieser angeordnet ist, um eine Druckdifferenz zu erfassen.

10. System nach einem der Ansprüche 6 bis 9, wobei die Bestimmungseinrichtung (40) einen Computer aufweist, der darin gespeicherte Kalibriergleichungen hat, wobei der Computer so betreibbar ist, daß er die Signale der Rate des Primärfluidstromes und der Mischungsstromrate aufnimmt, um die Kohlestromrate zu bestimmen und um das als Anzeige hierfür dienende Steuersignal bereitzustellen.

11. System nach einem der Ansprüche 6 bis 10, wobei die Regeleinrichtung (74, 74, 78) eine Mehrzahl von Luftdüsen (78) aufweisen, welche um jedes Zuführrióhr (16) herum angeordnet sind, um unter Ansprechen auf das Steuersignal Luft einzuspritzen.

12. Verfahren zum Überwachen und Steuern des Stromes von durch ein Fluid transportierten Feststoffteilchen, wobei das Verfahren die Schritte aufweise:
Aufschwemmen bzw. Suspendieren von Feststoffteilchen in einem Behälter (10), um eine Mischung von Feststoffteilchen in einem primären Fluid zu bilden,
Ausgabe der Mischung aus dem Behälter (10) durch zumindest ein Zuführrohr (16),
Berechnen (40) einer Massenstromrate der transportierten Feststoffteilchen und Bereitstellen eines Steuersignales, welches eine Anzeige für die Massenstromrate in dem oder jedem Zuführrohr (16) ist, und
Steuern (74) der Fluideinspritzung in das oder jedes Zuführrohr (16) unter Ansprechen auf das Steuersignal,
gekennzeichnet durch die Schritte:
Messen (32) der Stromrate des primären Fluids in dem bzw. jedem Zuführrohr (16) und Bereitstellen eines Signals, welches diese anzeigt, wobei der Schritt des Messens (32) der Stromrate des primären Fluids das Einspritzen eines Fluids unter Druck auf einer Seite eines Strömungskanales in dem bzw. jedem Zuführrohr (16) beinhaltet, und Erfassen (64, 66) des Druckes stromaufwärts und stromabwärts von dem eingespritzten Fluid, um einen Differenzdruck zu bestimmen, und
Messen (30) der Stromrate der Mischung in dem bzw. jedem Zuführrohr (16) und Bereitstellen eines Signales, welches diese anzeigt,
und dadurch daß der Berechnungsschritt das Berechnen der Massenstromrate der transportierten Feststoffteilchen aus einem Unterschied in der Stromrate der Mischung und der Stromrate des primären Fluids beinhaltet.

13. Verfahren nach Anspruch 12, wobei der Schritt (30) des Messens der Stromrate der Mischung das Einspritzen (36) eines Fluids unter einem vorbestimmten, konstanten Druck in das bzw. jedes Zuführrohr (16), sowie das Erfassen (44, 46) des Druckes stromaufwärts und stromabwärts von dem eingespritzten Fluid, um eine Druckdifferenz zu messen, beinhaltet.

## Revendications

1. Appareil pour contrôler et commander le flux de particules solides transportées dans un fluide, l'appareil comprenant :
une cuve (10) pour contenir un mélange de fluide primaire avec des particules en suspension;
au moins un conduit de distribution (16) relié à la cuve (10) pour distribuer un flux dudit mélange depuis la cuve (10);
un moyen (40) pour déterminer un débit massique de particules solides transportées dans le conduit de distribution ou chaque conduit de distribution (16), ledit moyen (40) servant à produire un signal de commande indiquant le débit massique dans le conduit de distribution ou chaque conduit de distribution (16); et
des moyens (74, 76, 78) pour réguler l'injection de fluide dans le conduit de distribution ou chaque conduit de distribution (16) en réponse au signal de commande;
caractérisé par :
un moyen (32) de mesure de flux de fluide primaire pour mesurer le débit du fluide primaire dans le conduit de distribution ou chaque conduit de distribution (16) et produire un signal représentatif dudit débit, le moyen (32) de mesure de flux de fluide primaire comprenant un canal d'écoulement (60) situé sur le conduit de distribution ou chaque conduit de distribution (16), des moyens d'injection (52, 56, 58) pour injecter un fluide sous pression sur un côté du canal d'écoulement (60), et au moins deux capteurs de pression (64, 66) montés en amont et en aval, respectivement, de la position d'injection du fluide pour déterminer la pression différentielle; et
un moyen (30) de mesure de flux de mélange pour mesurer le débit du mélange dans le conduit de distribution ou chaque conduit de distribution (16) et produire un signal représentatif dudit débit;
et en ce que le moyen (40) sert à déterminer le débit massique de particules solides transportées à partir du signal de débit de fluide primaire et du signal de débit de mélange.

2. Appareil selon la revendication 1, dans lequel le moyen (30) de mesure de flux de mélange comprend des moyens (34, 36, 38) pour injecter un fluide à une pression constante prédéterminée dans le conduit de distribution ou chaque conduit de distribution (16) et au moins deux capteurs de pression (44, 46), l'un étant monté en amont des moyens d'injection et l'autre en aval de ceux-ci pour mesurer une différence de pression.

3. Appareil selon la revendication 1 ou 2, dans lequel le moyen (40) pour déterminer le débit comprend un ordinateur comportant des équations d'étalonnage en mémoire afin de déterminer le débit massique de particules solides transportées dans le conduit de distribution ou chaque conduit de distribution (16) à partir d'une différence entre le débit massique de mélange et le débit de fluide primaire.

4. Appareil selon l'une quelconque des revendications 1 à 3, comprenant un moyen pour afficher le débit massique de particules solides dans le conduit de distribution ou tous les conduits de distribution (16).

5. Appareil selon l'une quelconque des revendications précédentes, dans lequel les moyens de régulation (74, 76, 78) comprennent un moyen (78) pour injecter un fluide sous pression dans le conduit de distribution ou chaque conduit de distribution (16), le moyen d'injection (78) étant situé de manière que le fluide injecté provoque une résistance pneumatique dans le conduit de distribution afin d'entraîner une diminution du débit massique de mélange en son sein.

6. Système pour contrôler et commander un flux de charbon pulvérisé comprenant un appareil selon la revendication 1, dans lequel :
le fluide primaire est de l'air;
les particules solides en suspension sont des particules de charbon;
la cuve (10) comprend au moins un pulvérisateur (10) pour broyer du charbon de manière que le pulvérisateur ou chaque pulvérisateur contienne un mélange d'air primaire avec des particules de charbon en suspension;
le moyen (40) sert à déterminer le débit de charbon dans chaque conduit de distribution (16) à partir d'une différence entre le débit massique de mélange et le débit de fluide primaire, et produire un signal de commande indiquant le débit de charbon;
le système comprenant :
une pluralité de conduits de distribution (16) reliés au pulvérisateur ou à chaque pulvérisateur (10) pour distribuer un flux du mélange au four (20); et
des moyens (74, 76, 78) pour réguler le débit de charbon dans chaque conduit de distribution (16) en réponse au signal de commande.

7. Système selon la revendication 6, dans lequel lesdits moyens d'injection (52, 56, 58) comprennent une buse d'air respective (58) positionnée dans un côté de chaque canal d'écoulement (60), chaque buse d'air (58) étant reliée à une source d'air, et dans lequel lesdits au moins deux capteurs de pression (64, 66) respectifs sont montés en amont et en aval, respectivement, de chaque buse d'air (58).

8. Système selon la revendication 7, dans lequel chaque canal d'écoulement (60) est conique à une extrémité en aval.

9. Système selon la revendication 6, 7 ou 8, dans lequel le moyen (30) de mesure de flux de mélange comprend des moyens (34, 36, 38) pour injecter de l'air à une pression constante prédéterminée dans chaque conduit de distribution (16) et au moins deux capteurs de pression (44, 46) pour chaque conduit de distribution, l'un étant situé en amont des moyens d'injection et l'autre en aval de ceux-ci pour détecter une différence de pression.

10. Système selon l'une quelconque des revendications 6 à 9, dans lequel le moyen (40) pour déterminer le débit comprend un ordinateur comportant des équations d'étalonnage en mémoire, l'ordinateur servant à recevoir les signaux de débit de fluide primaire et de débit de mélange pour déterminer le débit de charbon et produire le signal de commande représentatif dudit débit.

11. Système selon l'une quelconque des revendications 6 à 10, dans lequel les moyens de régulation (74, 76, 78) comprennent une pluralité de buses d'air (78) situées à la circonférence de chaque conduit de distribution (16) pour injecter de l'air en réponse au signal de commande.

12. Procédé pour contrôler et commander le flux de particules solides transportées dans un fluide, le procédé comprenant les phases consistant à:
mettre en suspension des particules solides dans une cuve (10) afin de former un mélange de particules solides dans un fluide primaire;
décharger le mélange de la cuve (10) via au moins un conduit de distribution (16);
calculer (en 40) un débit massique de particules solides transportées et produire un signal de commande indiquant le débit massique dans le conduit de distribution ou chaque conduit de distribution (16); et
commander (en 74) l'injection de fluide dans le conduit de distribution ou chaque conduit de distribution (16) en réponse au signal de commande;
caractérisé par les opérations consistant à :
mesurer (en 32) le débit de fluide primaire dans le conduit de distribution ou chaque conduit de distribution (16) et produire un signal représentatif dudit débit, la phase de mesure (en 32) du débit de fluide primaire comprenant l'injection d'un fluide sous pression sur un côté d'un canal d'écoulement dans le conduit de distribution ou chaque conduit de distribution (16), et la détection (en 64, 66) de la pression en amont et en aval du fluide injecté pour déterminer une pression différentielle; et
mesurer (en 30) le débit du mélange dans le conduit de distribution ou chaque conduit de distribution (16) et produire un signal représentatif dudit débit;
et en ce que l'opération de calcul comprend le calcul du débit massique de particules solides transportées à partir d'une différence entre le débit de mélange et le débit de fluide primaire.

13. Procédé selon la revendication 12, dans lequel la phase de mesure (en 30) du débit de mélange comprend l'injection (en 36) d'un fluide à une pression constante prédéterminée dans le conduit de distribution ou chaque conduit de distribution (16), et la détection (en 44, 46) de la pression en amont et en aval du fluide injecté pour mesurer une différence de pression.
